# EUROPÄISCHE PATENTSCHRIFT

(11) **EP 3 517 902 B1**
(45) Veröffentlichungstag und Bekanntmachung des Hinweises auf die Patenterteilung: **07.07.2021**
(21) Anmeldenummer: 18153623.6
(22) Anmeldetag: 26.01.2018
(51) Int. Cl.: G01F 23/00, G01F 23/284

(54) **VERFAHREN ZUM BESTIMMEN UND ANZEIGEN EINER VERBLEIBENDEN BEFÜLL- ODER ENTLEERZEIT**
METHOD FOR DETERMINING AND DISPLAYING A REMAINING FILLING OR EMPTYING PERIOD
PROCÉDÉ DE DÉTERMINATION ET D'AFFICHAGE D'UN TEMPS RESTANT DE REMPLISSAGE OU DE VIDANGE

(43) Veröffentlichungstag der Anmeldung: 31.07.2019
(73) Patentinhaber: VEGA Grieshaber KG, 77709 Wolfach (DE)
(72) Erfinder: Laun, Robert, 77756 Hausach (DE)
(74) Vertreter: Patentanwälte Bauer Vorberg Kayser

(56) Entgegenhaltungen:
- EP-A2- 1 072 968
- DE-A1-102016 112 692
- DE-A1-102016 120 048
- US-A- 5 439 019

## Beschreibung

Die vorliegende Erfindung betrifft ein Verfahren zum Bestimmen und Anzeigen einer verbleibenden Befüll- oder Entleerzeit.

Im Stand der Technik existieren Verfahren zum Befüllen von Säcke mit Schüttgut, von dem eine erste Menge im Grobstrom und eine zweite Menge im Feinstrom in das Gebinde eingebracht werden, um das Füllgewicht zu ergeben, wobei das Gewicht oder Volumen der ersten Menge außerhalb des Gebindes durch eine erste Messung feststellt und das Gebinde mit dieser ersten Menge befüllt wird, das Gebinde mit der zweiten Menge befüllt wird, diese Menge einer Wägung unterzogen und das Gewicht und/oder der Zeitpunkt des Befüllbeginns und/oder die Befüllgeschwindigkeit der zweiten Menge unter Benutzung der Ergebnisse der ersten Messung oder der Messungen vorausgegangener Befüllzyklen eingestellt wird. Ein solches Verfahren wird beispielsweise in der DE 19 855 377 A1 offenbart.

An diesem Verfahren wird es als nachteilig angesehen, dass es nicht auf große Behälter, bspw. Silos, Lagertanks oder Lagerbunker angewendet werden kann.

Eine Bestimmung und Anzeige einer Zeit bis ein Behälter vollständig gefüllt oder entleert ist kann in vielen Situationen aber vorteilhaft sein und wird daher auch für andere Behälterarten als Säcke und anderes Füllgut als Schüttgut gefordert. Eine Bestimmung der verbleibenden Befüll- oder Entleerzeit ist insbesondere vorteilhaft bei großen geschlossenen Behältern, wenn ein voller oder leerer Behälter für weitere Arbeiten notwendig ist. Ist eine entsprechende verbleibenden Befüll- oder Entleerzeit bekannt, so kann bspw. Wartungs- oder Bedienpersonal eine bessere Arbeitsplanung erstellen und es kann die Zeit bestimmt werden, wenn Arbeiten am dann vollständig befüllten oder vollständig entleerten Behälter fortgesetzt oder begonnen werden können oder wann eine Entleerung oder Befüllung begonnen werden muss, wenn zu einer bestimmten Zeit die Arbeiten begonnen werden sollen.

Weiterer Stand der Technik ist aus der US 5,439,019 A sowie der DE 10 2016 112 692 A1 bekannt.

Hier setzt die vorliegende Erfindung an.

Ein erfindungsgemäßes Verfahren zum Bestimmen einer erwarteten verbleibenden Befüll- oder Entleerzeit eines Behältnisses ist im angefügten unabhängigen Patentanspruch 1 spezifiziert.

Durch das erfindungsgemäße Verfahren wird es ermöglicht, unabhängig von der Größe eines Behältnisses eine erwartete verbleibende oder notwendige Befüll- oder Entleerzeit auszugeben, um dem Bedien- oder Wartungspersonal damit eine bessere Arbeitsplanung zu ermöglichen. Die Ausgabe der erwarteten Befüll- oder Entleerzeit erfolgt dabei immer aufgrund der derzeitigen Veränderungsgeschwindigkeit, des derzeitigen Füllstandes und gegebenenfalls unter Berücksichtigung vergangener Befüll- oder Entleervorgänge.

Bei dem vorliegenden Verfahren kann die Veränderungsgeschwindigkeit nutzerseitig vorgegeben werden, oder aufgrund von Messungen bestimmt werden. Abhängig davon, ob die Veränderungsgeschwindigkeit, also die Geschwindigkeit, mit der das Behältnis befüllt oder entleert wird, konstant ist, oder veränderlich, kann sie fest vorgegeben oder jeweils aktuell bestimmt werden. Die Veränderungsgeschwindigkeit kann bei Einsatz eines Dauerstich-Doppelradars (FMCW-Doppler-Radars) unmittelbar bestimmt oder beispielsweise durch Extrapolation der wenigstens zwei, vorzugsweise drei oder fünf zuletzt ermittelten Füllstand-Messwerte erfolgen. Dies ist möglich, wenn eine Veränderungsgeschwindigkeit für den jeweiligen Befüll- oder Entleervorgang als konstant angenommen werden kann.

Die Veränderungsgeschwindigkeit erfolgt durch Abrufen von abgespeicherten Füllstands-Messwerten aus einer Wertetabelle, bspw. von einem bei der Einrichtung des Feldgerätes abgespeicherten, oder von dem zuletzt erfolgten Befüll- oder Entleervorgang. Auf diese Weise können auch Variationen in der Veränderungsgeschwindigkeit über den Befüll- oder Entleervorgang berücksichtigt werden.

Zur Bestimmung der über den Befüll- oder Entleervorgang veränderlichen Veränderungsgeschwindigkeit erfolgt erfindungsgemäß eine Interpolation der Veränderung des Füllstandes und aus der zeitlichen Ableitung der Füllstandsänderung die Ermittlung der Veränderungsgeschwindigkeit.

Die Wertetabelle kann dabei Füllstand-Messwerte oder daraus abgeleitete Werte eines vorhergehenden Befüll- oder Entleervorgangs enthalten.

Zusätzlich zu der verbleibenden Befüll- oder Entleerzeit kann außerdem eine Varianz des ausgegebenen Wertes berechnet und ausgegeben werden. Da es sich bei der berechneten Befüll- oder Entleerzeit nicht immer um einen exakt berechneten Wert handelt, sondern die für die Berechnung verwendeten Parameter gewissen Schwankungen unterworfen sein können, kann es sinnvoll sein, wenn die Auswirkungen auf die verbleibende Befüll- oder Entleerzeit ebenfalls angezeigt werden.

Das Verfahren ist besonders einfach, wenn die aktuelle Veränderungsgeschwindigkeit bestimmt werden kann und konstant, beispielsweise, wenn die Veränderungsgeschwindigkeit konstant ist und durch den Kunden eingegeben wurde.

Alternativ kann die Veränderungsgeschwindigkeit an Hand eines gespeicherten Messwerttrends bestimmt werden. Damit kann eine genauere Berechnung der verbleibenden Befüll- oder Entleerzeit erfolgen, insbesondere wenn die Veränderungsgeschwindigkeit nicht konstant ist.

Die Veränderungsgeschwindigkeit kann beispielsweise bei zuvor erfolgten Befüllungen/Entleerungen an unterschiedlichen Punkten gespeichert werden (z.B. an den Punkten einer eingegebenen Linearisierungstabelle). Damit kann eine genauere Berechnung erfolgen, wenn die Veränderungsgeschwindigkeit nicht konstant ist.

Die vorliegende Erfindung wird nachfolgend anhand eines Ausführungsbeispiels eingehende erläutert.

Es zeigt:

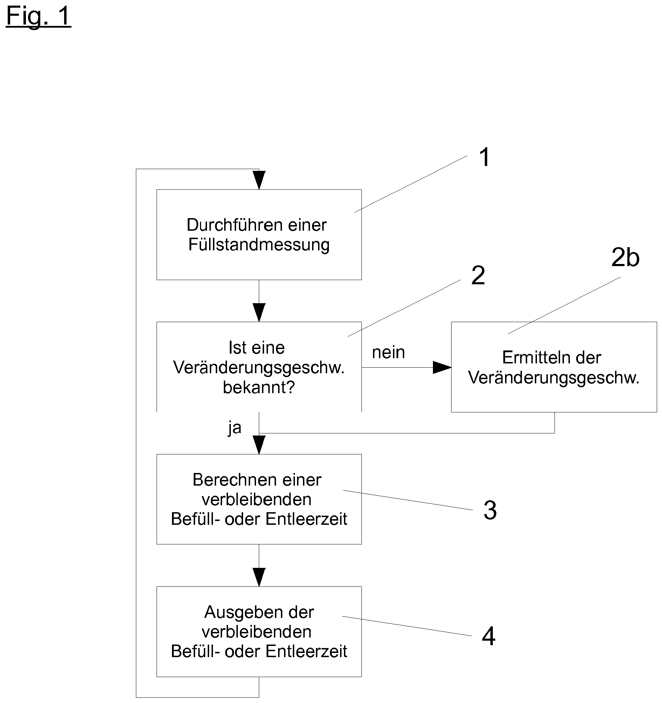

Figur 1 ein Ablaufdiagramm eines Ausführungsbeispiels eines Verfahrens gemäß der vorliegenden Erfindung.

Figur 1 zeigt ein Ablaufdiagramm eines Verfahrens zum Bestimmen und Anzeigen einer verbleibenden Befüll- oder Entleerzeit gemäß der vorliegenden Erfindung.

In einem ersten Schritt wird eine Füllstandmessung durchgeführt, um zu ermitteln, wie ein aktueller Füllstand in einem Behältnis ist. Ist der Füllstand bekannt, wird in einem zweiten Schritt überprüft, ob eine Veränderungsgeschwindigkeit, d.h. eine Geschwindigkeit, mit der sich der Füllstand aufgrund eines Befüll- oder Entleervorgangs verändert, bekannt ist.

Ist die Veränderungsgeschwindigkeit bekannt, so kann in einem dritten Schritt die verbleibende Befüll- oder Entleerzeit berechnet und in einem vierten Schritt ausgegeben werden. Die Ausgabe kann bspw. über eine optische Anzeige der verbleibenden Befüll- oder Entleerzeit erfolgen. Die Veränderungsgeschwindigkeit kann bspw. durch eine feste Vorgabe durch einen Benutzer oder aus einem vorhergehenden Befüll- oder Entleervorgang bekannt sein.

Ist die Veränderungsgeschwindigkeit nicht bekannt, so muss diese ermittelt werden. Dies kann bspw. durch zeitliche Ableitung einer aktuellen Messwertentwicklung auf Basis von vorangegangenen Füllstandmesswerten erfolgen.

Mit dem aktuellen Füllstand und der Veränderungsgeschwindigkeit kann dann die verbleibende Befüll- oder Entleerzeit berechnet und ausgegeben werden, bspw. über eine optische Anzeige und/oder die Übermittlung an eine übergeordnete Einheit, bspw. eine Leitwarte.

Um die Genauigkeit der Berechnung weiter zu verbessern oder um jeweils einen aktuellen Wert für die verbleibende Befüll- oder Entleerzeit ausgeben zu können, kann der vorliegend beschriebene Verfahrensablauf zyklisch wiederholt werden.

## Patentansprüche

1. Verfahren zum Bestimmen einer verbleibenden Befüll- oder Entleerzeit eines Behältnisses mit den Schritten
- Ermitteln eines aktuellen Füllstands
- Berechnen der erwarteten verbleibenden Befüll- oder Entleerzeit abhängig von dem ermittelten Füllstand und einer derzeitigen Veränderungsgeschwindigkeit, wobei die Bestimmung der derzeitigen Veränderungsgeschwindigkeit durch Abrufen von abgespeicherten Füllstands-Messwerten aus einer Wertetabelle, die Füllstand-Messwerte eines vorhergehenden Befüll- oder Entleervorgangs enthält, erfolgt, wobei eine Interpolation einer Veränderung des Füllstandes und eine Bildung einer zeitlichen Ableitung der Veränderung des Füllstandes erfolgt, und
- Ausgeben der erwarteten verbleibenden Befüll- oder Entleerzeit.

2. Verfahren gemäß Anspruch 1,
**dadurch gekennzeichnet, dass** zusätzlich zur verbleibenden Befüll- oder Entleerzeit eine Varianz des ausgegebenen Wertes berechnet und ausgegeben wird.

## Claims

1. Method for determining a remaining filling or draining time of a container, comprising the steps of
- determining a current fill level
- calculating the expected remaining filling or draining time from the determined filling level and a current rate of change, the current rate of change being determined by recalling saved filling level measurement values from a value table which contains filling level measurement values of a preceding filling or draining process, a change in the filling level being interpolated and the time derivative of the change in the filling level being formed, and
- issuing the expected remaining filling or draining time.

2. Method according to claim 1,
**characterized in that**
in addition to the remaining filling or draining time, a variance of the issued value is calculated and displayed.

## Revendications

1. Procédé de détermination d'un temps restant de remplissage ou de vidange d'un conteneur, comprenant les étapes consistant à
- déterminer un niveau actuel de remplissage
- calculer le temps restant attendu de remplissage ou de vidange en fonction du niveau de remplissage déterminé et d'une vitesse de changement actuelle
- dans lequel la détermination de la vitesse de changement actuelle se fait en extrayant des valeurs de mesure de niveau de remplissage stockées à partir d'une table de valeurs qui contient des valeurs de mesure de niveau de remplissage d'une opération précédente de remplissage ou de vidange, dans lequel une interpolation d'un changement du niveau de remplissage et une formation d'une dérivée temporelle du changement du niveau de remplissage sont réalisées, et
- sortir le temps restant attendu de remplissage ou de vidange.

2. Procédé selon la revendication 1, **caractérisé par le fait que**, en plus du temps restant de remplissage ou de vidange, une variance de la valeur sortie est calculée et sortie.
